# FASCICULE DE BREVET EUROPEEN

(11) **EP 3 033 183 B1**
(45) Date de publication et mention de la délivrance du brevet: **24.10.2018**
(21) Numéro de dépôt: 14750520.0
(22) Date de dépôt: 18.06.2014
(51) Int. Cl.: B32B 37/24, B32B 38/14, B05D 1/06, E04C 2/284

(54) **PROCÉDÉ DE FABRICATION DE PANNEAUX COMPOSITES SANDWICHS THERMOLAQUÉS À ÂME ISOLANTE**
VERFAHREN ZUR HERSTELLUNG PULVERBESCHICHTETER SANDWICHVERBUNDPLATTEN MIT EINEM ISOLATIONSKERN
PROCESS FOR MANUFACTURING POWDER-COATED SANDWICH COMPOSITE PANELS HAVING AN INSULATING CORE

(30) Priorité: 13.08.2013 FR 1301932
(43) Date de publication de la demande: 22.06.2016
(73) Titulaire: AV COMPOSITES, 13210 Saint Remy de Provence (FR)
(72) Inventeur: APRIN, Vincent, 13210 Saint Remy de Provence (FR)
(86) Numéro de dépôt international: PCT/FR2014/000145
(87) Numéro de publication internationale: WO 2015/022452

(56) Documents cités:
- WO-A2-94/22594
- FR-A- 1 509 010
- US-A1- 2012 263 927

## Description

La présente invention concerne un procédé de fabrication de panneaux sandwichs à âme isolante permettant la dépose d'une peinture par la technologie de thermolaquage ou de laquage en poudre.

L'invention est applicable lors de l'utilisation de panneaux sandwichs rigides utilisables pour la réalisation de toitures isolantes de véranda, de balcons, de kiosques, de galeries, de bardages de maison ou de bâtiments industriels, de piscines hors sol ou enterrées, de panneaux de remplissage, de volets isolants, de portes, de portails, d'impostes, etc.

Les panneaux sandwichs sont généralement constitués d'une âme de matière organique ou minérale plus ou moins rigide ayant des fonctionnalités thermiques, de légèreté, de rigidité, acoustiques, etc., disposée entre deux parements rigides composites, métalliques ou minéraux.

Il est connu (EP 0330237) que des panneaux de battant de porte ou similaire comprennent intérieurement une coque de tôle et du coté externe un revêtement d'isolation synthétique dont la résistance à la chaleur se trouve en dessous de la température nécessaire pour la fusion de la poudre. Ce dispositif est médiocre car le revêtement d'isolation synthétique a une résistance à la chaleur inférieure à la température de la fusion de la peinture générant ainsi un risque de fusion et une dégradation du revêtement d'isolation. De plus dans ce concept la coquille métallique est intérieure et non extérieure donc la poudre de matière synthétique d'enduction est en contact directement avec le revêtement d'isolation synthétique. De plus pour réduire les risques de dégradation il est absolument nécessaire de se limiter à un faisceau de rayonnement énergétique et de ce fait les autres systèmes de chauffage tels que étude, four, etc., ne peuvent pas être utilisés.

Il est également connu (EP 0042759) que sur des panneaux autoportants est appliquée une poudre de peinture et qu'une surface non adhérente est pressée sur cette poudre afin de durcir à chaud cette peinture en poudre. Ce dispositif est médiocre car la polymérisation de la poudre doit se faire par l'intermédiaire d'une presse, ce qui limite les possibilités de formes, d'empilement de plusieurs panneaux, de flexibilité industrielle, car il est nécessaire d'avoir une presse avec des plateaux chauffants et de presser panneau par panneau. Par ailleurs dans ce procédé il est utilisé uniquement sur des panneaux de fibres ou particules de copeaux, sans âme isolante.

On connaît aussi (EP 1361257), que sur des substrats tels que des bois à faible conductivité on applique des revêtements pulvérulents dans lesquels on ajoute des charges conductrices cuisant à faible température contenant des additifs conducteurs afin d'augmenter l'attraction électrostatique sur des substrats préchauffés en bois travaillé. Ce dispositif est médiocre car il est limité à l'utilisation de pièces uniquement en bois et ne peut être adapté à des panneaux avec une âme isolante et de plus avec d'autres parements métalliques ou composites.

Il est connu (EP 0298659) que dans un panneau d'architecture en verre est liée une feuille d'aluminium par l'intermédiaire d'un revêtement à base de poudre à base de polyester. Ce dispositif est médiocre car le revêtement à base de poudre est positionné entre 2 matériaux et il n'est pas positionné à l'extérieur. Par ailleurs ce revêtement ne peut être utilisé avec des panneaux ayant une âme isolante.

Enfin, un dernier dispositif, cependant silencieux quant à une utilisation pour des panneaux composites de type sandwich comprenant une âme à base de mousse, est connu du document US 2012/0263927 A1.

La mise en oeuvre de ces systèmes de panneaux isolants comporte ainsi quelques inconvénients, notamment:
- les panneaux de battant de porte ou similaire comprenant intérieurement une coque de tôle et du coté externe possédant un revêtement d'isolation synthétique avec une résistance à la chaleur en dessous de la température nécessaire pour la fusion de la poudre, engendrent un problème de fusion et une dégradation du revêtement d'isolation lors de la fusion de la poudre.
- les panneaux autoportants peuvent recevoir une poudre de peinture sur laquelle une surface non adhérente est pressée afin de durcir à chaud cette peinture en poudre. Ce dispositif est très limité car il est nécessaire d'avoir une presse avec des plateaux chauffants, et de presser panneau par panneau. Par ailleurs les panneaux peuvent être uniquement plan, et ils ne peuvent pas être mis en étuve. De plus il est utilisé que des panneaux de fibres ou particules de copeaux, et ce dispositif n'utilise pas des âmes isolantes.
- des substrats tels que des bois à faible conductivité peuvent recevoir des revêtements pulvérulents dans lesquels on ajoute des charges conductrices cuisant à faible température contenant des additifs conducteurs afin d'augmenter l'attraction électrostatique sur des substrats préchauffés en bois travaillé. Ce dispositif est limité à l'utilisation de pièces uniquement en bois et ne peut être adapté à des panneaux avec une âme isolante, de plus il ne peut pas utiliser d'autres parements métalliques ou composites.
- les panneaux d'architecture en verre liant une feuille d'aluminium par l'intermédiaire d'un revêtement à base de poudre à base de polyester, ne permettent pas d'avoir une peinture en poudre extérieure et de plus ce revêtement ne peut être utilisé avec des panneaux ayant une âme isolante.

La présente invention a notamment pour but de mettre à la disposition des utilisateurs un dispositif qui permet :
- l'utilisation des panneaux composites sandwichs et d'utiliser des isolants pouvant recevoir une métallisation de la mousse en surface sans aucune dégradation lors cette métallisation,
- l'utilisation des panneaux composites sandwichs et d'utiliser des âmes isolantes métallisées avec des températures de fusion de ces âmes isolantes au-dessus ou égale aux températures de fusion des peintures en poudre. Ceci permet de fusionner en surface des peintures en poudre solides, chargées électriquement et polymérisables sur le panneau complet, sans aucune dégradation de la mousse isolante aux températures de fusion de ces poudres, ce procédé étant appelé thermolaquage.
- l'utilisation des panneaux composites sandwichs avec une mousse isolante métallisée assure le passage d'un courant électrique, ce qui permet la tenue de la peinture en poudre par ce phénomène électrostatique et permet de réaliser des formes très complexes, et d'assurer la polymérisation des peintures en poudre de ces pièces complexes dans une simple étuve.
- l'utilisation des panneaux composites sandwichs avec une mousse isolante thermoplastique et d'utiliser de la matière recyclée de même composition chimique que la matière qui a servi à fabriquer cette mousse isolante thermoplastique.
- l'utilisation des panneaux composites sandwichs avec une mousse isolante thermoplastique permettant de réaliser des opérations de thermoformage.
- l'utilisation des panneaux composites sandwichs avec une mousse isolante thermoplastique permettant de déposer non seulement un décor par projection de peinture sous une différence de potentiel électrique afin d'assurer sa tenue sur la pièce à peindre, mais aussi la possibilité de déposer la poudre de peinture par sublimation de décor sur support papier transférée directement sur la surface conductrice sur la au moins face métallisée du panneau
et, dépourvu de tous les inconvénients susmentionnés dans les dispositifs connus actuels.

Pour atteindre les objectifs ci-dessus, l'invention concerne un procédé de fabrication de panneaux composites de type « sandwich » dont une face est destinée à être exposée à un environnement climatique (pluie, vent, thermique tel que chaleur et froid, bruit) et l'autre face tournée vers l'intérieur d'un espace à protéger, l'une de ces faces au moins étant recouverte de peinture solide ou liquide, et comprenant au moins une âme isolante.

Une disposition caractéristique de l'invention, est qu'on utilise une âme isolante à base de mousse thermoplastique ayant un haut point de fusion supérieur ou égal à la température de polymérisation de la peinture déposée. En variante il est possible également d'utiliser une mousse thermodurcissable ayant un point de dégradation supérieur à la température de polymérisation de la peinture déposée.

Une autre disposition caractéristique de l'invention, est qu'on réalise sur au moins une face du panneau isolant sandwich, une métallisation par la projection de métal conducteur en phase liquide ou vapeur ou solide avec des particules métalliques d'épaisseur comprise entre 0,01 à 1 millimètres ou le collage d'un parement métallique conducteur de 0,01 à 5 millimètres d'épaisseur, ce qui délimite une zone conductrice sur la au moins face du panneau isolant afin de permettre le passage de courant électrique.

Selon une autre disposition caractéristique de l'invention est qu'on réalise la projection de la poudre de peinture chargée électriquement sous une tension électrique élevée (entre 20 et 100 KiloVolts), et sur la au moins face métallisée on applique simultanément une tension électrique différente ou souvent une mise à la masse afin de permettre à la peinture de se fixer de manière électrostatique sur la au moins face métallisée. Cette peinture ainsi fixée sera polymérisée dans un four ou étuve à une température et durée définie, cette peinture pouvant se cuire à des températures entre 120°C et 210°C. Ce procédé est appelé communément thermolaquage.

Une autre disposition caractéristique de l'invention est qu'on utilise pour réaliser la mousse isolante apte à constituer la au moins âme isolante, une matière thermoplastique ayant un point de fusion supérieur ou égal à la température de polymérisation des poudres de peinture, telle qu'une mousse thermoplastique à base de polyéthylène téréphtalate (PET) qui a une température de fusion de 240°C, ou de toute autre âme isolante alvéolaire thermoplastique tel que du polyéthylène PE, Polychlorure de vinyle PVC, Polyétherimide PEI, Polypropylène PP, les polyamides PA.

Selon une autre disposition caractéristique de l'invention est qu'on réalise la mousse isolante apte à constituer la au moins âme isolante thermoplastique, en utilisant de la matière recyclée de même composition chimique que la matière qui a servi à fabriquer cette mousse isolante thermoplastique.

Une autre disposition caractéristique de l'invention est qu'on puisse déformer la au moins âme isolante par des opérations de thermoformage, à des températures proches de la fusion de la matière thermoplastique, ce qui permet de donner ainsi à cette âme des formes géométriques complexes et ceci de façon répétitive si nécessaire.

Selon une autre disposition caractéristique de l'invention est qu'on réalise la dépose de la peinture avec un autre procédé que le thermolaquage qui est de la sublimation de décor à base de peinture sur support papier transférée directement en température sur la surface conductrice de la au moins face métallisée du panneau.

Une disposition caractéristique de l'invention est que l'âme isolante est une mousse thermoplastique de densité comprise entre 30 et 200 kg/m3, à base de polyéthylène téréphtalate qui a une température de fusion de 240°C, ou d'autre mousse thermoplastique tel qu'une mousse en polyéthylène, etc. Il est possible d'utiliser de la matière recyclée de matière identique à la matière qui a servi à fabriquer cette mousse isolante thermoplastique, ou encore l'âme isolante peut être encore une mousse isolante rigide de la famille des thermodurcissables telle qu'une mousse de polyuréthanne, phénolique, etc, qui n'a pas de point de fusion mais une température de dégradation, et qui n'est pas transformable en température.

Les caractéristiques et avantages ci-dessus, et d'autres encore, ressortiront mieux de la description qui suit et des dessins annexés dans lesquels :

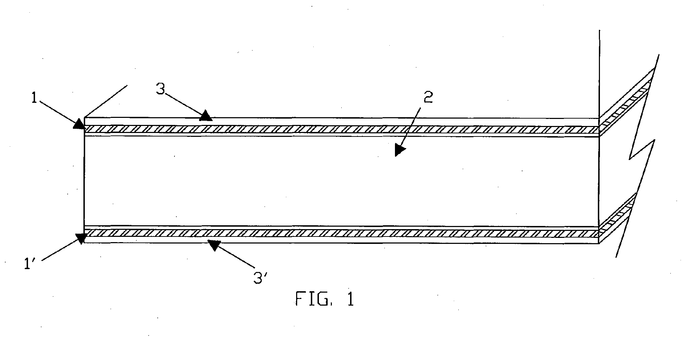

La figure 1 est une vue en perspective et en coupe transversale d'un panneau composite sandwich isolant et illustrant une métallisation (1) et (1') par la projection de métal conducteur ou le collage d'un parement métallique sur une mousse isolante thermoplastique (2), cette métallisation pouvant être de l'aluminium, de l'acier, du cuivre ou tout autre métal conducteur, et pouvant avoir des épaisseurs comprises entre 0,01 et 5mm. Cette métallisation (1, 1') délimite une zone conductrice sur la au moins face du panneau isolant (2) ce qui permet le passage de courant électrique et permet le dépôt de la poudre de peinture (3) et (3') qui peut être à base de résine organique telle que de polyester, polyuréthanne, etc. La peinture pouvant être déposée par thermolaquage c'est-à-dire que la peinture est projeté sous une tension électrique (entre 30 et 100 KiloVolts) sur la au moins face métallisée (1,1'), sur laquelle on applique simultanément une tension ou une mise à la masse.

La vue en coupe de la figure 1 illustre la mousse isolante (2) disposé entre le ou les deux parties métalliques (1, 1'), cette mousse isolante (2) peut être une matière thermoplastique ayant un point de fusion supérieur ou égal à la température de polymérisation des poudres de peinture (3,3'), telle qu'une mousse thermoplastique à base de polyéthylène téréphtalate (PET) qui a une température de fusion de 240°C ou de toute autre âme isolante alvéolaire thermoplastique tel que du polyéthylène PE, Polychlorure de vinyle PVC, Polyétherimide PEI, Polypropylène PP, les polyamides PA, ou encore une mousse isolante rigide de la famille des thermodurcissables telle qu'une mousse de polyuréthanne, phénolique, etc. Les mousse thermodurcissables n'ont pas de point de fusion mais elles ont une température de dégradation qui sera supérieur à la température de polymérisation des poudres de peinture, cette mousse thermodurcissable n'est pas par ailleurs thermoformable. On polymérise cette peinture (3,3'), « fixée » par cette différence de potentiel électrique en plaçant le panneau sandwich isolant dans un four .

On a représenté, sur les dessins, une application très intéressante de l'invention pour les panneaux sandwichs principalement constitués d'une âme isolante (2) en matière thermoplastique telle qu'une mousse isolante de polyéthylène téréphtalate (PET), ou de toute âme isolante alvéolaire thermoplastique, entre deux parties métallisées (1) et (1') pouvant être de l'aluminium, obtenu par projection ou par collage d'un parement, délimitant une zone conductrice qui permet le passage de courant électrique, pour réaliser le thermolaquage, c'est-à-dire le dépôt de la poudre de peinture (3,3') chargée électriquement et « fixée » par cette différence de potentiel électrique sur la mousse isolante thermoplastique métallisée. Cette peinture est ensuite polymérisée dans un four, sans aucune dégradation de la mousse isolante thermoplastique car elle possède un haut point de fusion supérieur ou égal à la température de polymérisation de la peinture.

## Revendications

1. Procédé de fabrication de panneaux composites dont une face est destinée à être exposée à un environnement climatique tel que la pluie, le vent, le bruit, thermique tel que chaleur et froid, et l'autre face tournée vers l'intérieur d'un espace à protéger, l'une de ces faces au moins étant recouverte de peinture, et tel que :
- on réalise sur au moins une face d'un panneau isolant sandwich une métallisation par la projection de métal conducteur pour obtenir ainsi un film métallique (1,1') qui délimite une zone conductrice sur la au moins une face du panneau isolant et qui permet le passage de courant électrique, et on réalise le dépôt d'une poudre de peinture (3,3') solide polymérisable sur la au moins une face métallisée (1,1') sur laquelle on applique simultanément une tension électrique ou une mise à la masse,
- et par la différence de potentiel électrique entre la peinture (3,3') et la totalité de la au moins une face métallisée (1,1') du panneau isolant, on fixe d'une manière homogène cette peinture (3,3'), sur la zone conductrice métallisée (1,1') de polarité électrique différente, et on polymérise cette peinture (3,3'), fixée par cette différence de potentiel électrique en plaçant le panneau dans un four
caractérisé en ce :
- on utilise des panneaux isolants de type sandwich comprenant au moins une âme isolante (2)
- et pour constituer la au moins une âme isolante (2) on utilise une matière à base de mousse ayant un haut point de fusion ou de dégradation supérieur ou égal à la température de polymérisation de la peinture
- alternativement on réalise sur au moins une face du panneau isolant sandwich la métallisation par collage d'un parement métallique,
- et on réalise le dépôt de la poudre de peinture (3,3') chargée électriquement sous une tension entre et 100 KiloVolts, et sur la au moins face métallisée (1,1') on applique simultanément une tension électrique, ou une mise à la masse.

2. Procédé de fabrication de panneau composite isolant de type sandwich selon la revendication 1, **caractérisé en ce qu'**on réalise la métallisation (1,1') par projection liquide ou vapeur ou solide avec des particules métalliques de dimensions de 0,01 à 1 millimètres

3. Procédé de fabrication de panneau composite isolant de type sandwich selon la revendication 1, **caractérisé en ce qu'**on réalise la métallisation par collage d'un parement métallique conducteur de 0,01 à 5 millimètres d'épaisseur.

4. Procédé selon l'une quelconque des revendications 1 à 3, **caractérisé en ce qu'**on utilise pour constituer la au moins âme isolante (2) une matière à base de mousse isolante rigide de la famille thermodurcissable qui n'a pas de point de fusion et qui n'est pas transformable en température telle qu'une mousse de polyuréthanne, phénolique, etc.

5. Procédé de fabrication de panneau isolant de type sandwich selon l'une quelconque des revendications 1 à 3, **caractérisé en ce que** on utilise pour constituer la au moins âme isolante (2) une matière à base de mousse thermoplastique à point de fusion.

6. Procédé selon la revendication 5, **caractérisé en ce qu'**on utilise pour réaliser la mousse isolante apte à constituer la au moins âme (2) isolante une matière thermoplastique ayant un point de fusion supérieur ou égal à la température de polymérisation des poudres de peinture, telle qu'une mousse thermoplastique à base de polyéthylène téréphtalate qui a une température de fusion de 240°C.

7. Procédé selon la revendication 6,' **caractérisé en ce qu'**on fabrique la mousse isolante apte à constituer la au moins âme (2) isolante thermoplastique en utilisant de la matière recyclée de matière identique à la matière qui a servi à fabriquer cette mousse isolante thermoplastique

8. Procédé de fabrication de panneau isolant de type sandwich selon l'une des revendications 5 à 7, **caractérisé en ce que**
- on déforme la au moins âme isolante (2) par des opérations de thermoformage, à des températures proches de la fusion de sa matière thermoplastique,
- on donne ainsi à cette âme (2) des formes géométriques complexes (9) et ceci de façon répétitive si nécessaire, et
- on réalise ensuite les autres étapes de fabrication et de métallisation (1,1') du panneau isolant et du thermolaquage de peinture (3,3') sur ce panneau métallisé.

9. Procédé de fabrication de panneau isolant de type sandwich selon l'une quelconque des revendications 1 à 8, **caractérisé en ce qu'**on cuit la peinture (3,3') à des températures élevées entre 120 et 210° C.

10. Procédé de fabrication de panneau isolant de type sandwich selon l'une quelconque des revendications 1 à 9, **caractérisé en ce qu'**on dépose la poudre de peinture par projection sur la au moins face métallisée du panneau.

11. Procédé de fabrication de panneau isolant de type sandwich selon l'une quelconque des revendications 1 à 9, **caractérisé en ce qu'**on dépose la poudre de peinture par sublimation de décor à base de peinture sur support papier (3,3') transférée directement sur la surface conductrice de la au moins face métallisée du panneau.

12. Procédé de fabrication de panneau composite de type sandwich selon l'une quelconque des revendications 1 à 9, **caractérisé en ce qu'**on utilise un matériau mousse, constituant la au moins âme (2) isolante, de densité comprise entre 30 et 200 kg/m3.

13. Procédé selon l'une quelconque des revendications 1 à 9, **caractérisé en ce qu'**on utilise des peintures (3,3') en poudre à base de résine organique telle que de polyester, polyuréthanne, etc.

14. Procédé selon l'une quelconque des revendications 1 à 10, **caractérisé en ce qu'**on réalise une métallisation sur la au moins face du panneau isolant d'une épaisseur comprise en 0,01 et 5mm.

## Patentansprüche

1. Verfahren zur Herstellung von Verbundplatten, von denen eine Seite dazu vorgesehen ist, einer klimatischen Umgebung wie dem Regen, dem Wind, dem Lärm, thermisch wie etwa Wärme und Kälte ausgesetzt zu werden, und die andere Seite der Innenseite eines Raums zugewandt ist, der geschützt werden soll, wobei mindestens eine dieser Seiten mit Farbe bedeckt ist, und derart, dass:
- auf mindestens einer Seite einer isolierenden Sandwichplatte eine Metallisierung durch das Aufsprühen von leitfähigem Metall ausgeführt wird, um so einen metallischen Film (1, 1') zu erhalten, der einen leitfähigen Bereich auf der mindestens einen Seite der isolierenden Platte begrenzt und der das Durchfließen von elektrischen Strom ermöglicht, und das Aufbringen eines festen, polymerisierbaren Farbpulvers (3, 3') auf der mindestens einen metallisierten Seite (1, 1') ausgeführt wird, an welcher gleichzeitig eine elektrische Spannung oder eine Erdung angelegt wird,
- und durch den elektrischen Potentialunterschied zwischen der Farbe (3, 3') und der Gesamtheit der mindestens einen metallisierten Seite (1, 1') der isolierenden Platte diese Farbe (3, 3') in einer homogenen Weise auf dem leitfähigen metallisierten Bereich (1, 1') von unterschiedlicher elektrischer Polarität fixiert wird, und diese durch diesen elektrischen Potentialunterschied fixierte Farbe (3, 3') polymerisiert wird, indem die Platte in einen Ofen gegeben wird,
**dadurch gekennzeichnet, dass**:
- isolierende Platten vom Sandwich-Typ verwendet werden, die mindestens einen isolierenden Kern (2) umfassen,
- und um den mindestens einen isolierenden Kern (2) zu bilden ein Material auf Basis von Schaumstoff verwendet wird, der einen hohen Schmelz- oder Zersetzungspunkt aufweist, welcher größer oder gleich der Polymerisationstemperatur der Farbe ist,
- alternativ auf mindestens einer Seite der isolierenden Sandwichplatte die Metallisierung durch Aufkleben einer metallischen Verkleidung ausgeführt wird,
- und das Aufbringen des elektrisch geladenen Farbpulvers (3, 3') unter einer Spannung zwischen 30 und 100 Kilovolt ausgeführt wird, und auf der mindestens einen metallisierten Seite (1, 1') gleichzeitig eine elektrische Spannung oder eine Erdung angelegt wird.

2. Verfahren zur Herstellung einer isolierenden Verbundplatte vom Sandwich-Typ nach Anspruch 1, **dadurch gekennzeichnet, dass** die Metallisierung (1, 1') durch Aufsprühen von Flüssigkeit oder Dampf oder Feststoff mit metallischen Teilchen von Abmessungen von 0,01 bis 1 Millimeter ausgeführt wird.

3. Verfahren zur Herstellung einer isolierenden Verbundplatte vom Sandwich-Typ nach Anspruch 1, **dadurch gekennzeichnet, dass** die Metallisierung durch Aufkleben einer leitfähigen metallischen Verkleidung einer Dicke von 0,01 bis 5 Millimeter ausgeführt wird.

4. Verfahren nach einem der Ansprüche 1 bis 3, **dadurch gekennzeichnet, dass** um den mindestens einen isolierenden Kern (2) zu bilden ein Material auf Basis von starrem isolierendem Schaumstoff aus der wärmehärtbaren Familie verwendet wird, das keinen Schmelzpunkt aufweist und das nicht durch Temperatur veränderbar ist, wie etwa ein Polyurethan-, Phenolschaumstoff usw.

5. Verfahren zur Herstellung einer isolierenden Platte vom Sandwich-Typ nach einem der Ansprüche 1 bis 3, **dadurch gekennzeichnet, dass** um den mindestens einen isolierenden Kern (2) zu bilden ein Material auf Basis von thermoplastischem Schaumstoff mit Schmelzpunkt verwendet wird.

6. Verfahren nach Anspruch 5, **dadurch gekennzeichnet, dass** um den isolierenden Schaumstoff auszuführen, welcher in der Lage ist, den mindestens einen isolierenden Kern (2) zu bilden, ein thermoplastisches Material verwendet wird, welches einen Schmelzpunkt aufweist, der größer oder gleich der Polymerisationstemperatur der Farbpulver ist, wie etwa ein thermoplastischer Schaumstoff auf Basis von Polyethylenterephthalat, das eine Schmelztemperatur von 240°C aufweist.

7. Verfahren nach Anspruch 6, **dadurch gekennzeichnet, dass** der isolierende Schaumstoff, welcher in der Lage ist, den mindestens einen thermoplastischen isolierenden Kern (2) zu bilden, unter Verwenden von Recyclingmaterial aus identischem Material wie dem Material hergestellt wird, welches zum Herstellen dieses thermoplastischen isolierenden Schaumstoffs diente.

8. Verfahren zur Herstellung einer isolierenden Platte vom Sandwich-Typ nach einem der Ansprüche 5 bis 7, **dadurch gekennzeichnet, dass**
- der mindestens eine isolierende Kern (2) über Thermoformvorgänge bei Temperaturen nahe dem Schmelzen seines thermoplastischen Materials verformt wird,
- diesem Kern (2) so geometrisch komplexe Formen (9) verliehen werden, und dies falls erforderlich in wiederholter Weise, und
- anschließend die anderen Schritte zur Herstellung und zur Metallisierung (1, 1') der isolierenden Platte und der Farb-Thermolackierung (3, 3') auf dieser metallisierten Platte ausgeführt werden.

9. Verfahren zur Herstellung einer isolierenden Platte vom Sandwich-Typ nach einem der Ansprüche 1 bis 8, **dadurch gekennzeichnet, dass** die Farbe (3, 3') bei hohen Temperaturen zwischen 120 und 210°C gebrannt wird.

10. Verfahren zur Herstellung einer isolierenden Platte vom Sandwich-Typ nach einem der Ansprüche 1 bis 9, **dadurch gekennzeichnet, dass** das Farbpulver durch Aufsprühen auf der mindestens metallisierten Seite der Platte aufgebracht wird.

11. Verfahren zur Herstellung einer isolierenden Platte vom Sandwich-Typ nach einem der Ansprüche 1 bis 9, **dadurch gekennzeichnet, dass** das Farbpulver durch Sublimation von Dekor auf Basis von Farbe auf Papierträger (3, 3') aufgebracht wird, das direkt auf die leitfähige Fläche der mindestens metallisierten Seite der Platte übertragen wird.

12. Verfahren zur Herstellung einer Verbundplatte vom Sandwich-Typ nach einem der Ansprüche 1 bis 9, **dadurch gekennzeichnet, dass** ein Schaumstoffmaterial einer Dichte im Bereich zwischen 30 und 200 kg/m3 verwendet wird, welches den mindestens einen isolierenden Kern (2) bildet.

13. Verfahren nach einem der Ansprüche 1 bis 9, **dadurch gekennzeichnet, dass** Pulverfarben (3, 3') auf Basis von organischem Harz, wie etwa Polyester, Polyurethan usw. verwendet werden.

14. Verfahren nach einem der Ansprüche 1 bis 10, **dadurch gekennzeichnet, dass** eine Metallisierung auf der mindestens einen Seite der isolierenden Platte einer Dicke im Bereich zwischen 0,01 und 5 mm ausgeführt wird.

## Claims

1. A method for manufacturing composite panels one side of which is intended to be exposed to a climatic environment such as rain, wind, noise, thermal environment such as heat and cold, and the other side facing the inside of a space to be protected, one of these sides at least being covered with paint,
and such as:
- a metallization is carried out on at least one side of an insulating sandwich panel by the projection of conductive metal in order to obtain a metal film (1, 1') which delimits a conductive area on the at least one side of the insulating panel and which allows the passage of electric current, and the deposition of a polymerizable solid paint powder (3, 3') is carried out on the at least one metallized side (1, 1') on which an electric voltage or a grounding is simultaneously applied,
- and by the difference of electric potential between the paint (3, 3') and the totality of the at least one metallized side (1, 1') of the insulating panel, this paint (3, 3') is fixed in a homogeneous manner on the metallized conductive area (1, 1') with different electrical polarity, and this paint (3, 3') fixed by this electrical potential difference is polymerized by placing the panel in an oven
**characterized in that**:
- sandwich-type insulating panels comprising at least one insulating core (2) are used
- and, to constitute the at least one insulating core (2), a foam material, having a high melting or degradation point greater than or equal to the polymerization temperature of the paint, is used
- alternatively, the metallization by bonding of a metal facing is carried out on at least one side of the insulating sandwich panel,
- and the deposition of the paint powder (3, 3') electrically charged at a voltage between 30 and 100 kiloVolts is carried out and, on the at least one metallized side (1, 1'), an electrical voltage or a grounding is simultaneously applied.

2. The method for manufacturing a sandwich-type insulating composite panel according to claim 1, **characterized in that** the metallization (1, 1') is carried out by liquid or vapor or solid projection with metal particles of dimensions from 0.01 to 1 millimeter.

3. The method for manufacturing a sandwich-type insulating composite panel according to claim 1, **characterized in that** the metallization is carried out by bonding of a conductive metal facing of a thickness from 0.01 to 5 millimeters.

4. The method for manufacturing a sandwich-type insulating composite panel according to any one of claims 1 to 3, **characterized in that**, to constitute the at least one insulating core (2), a rigid insulating foam material of the thermosetting family which has no melting point and which is not temperature-transformable such as polyurethane foam, phenolic foam, etc., is used.

5. The method for manufacturing a sandwich-type insulating composite panel according to any one of claims 1 to 3, **characterized in that**, to constitute the at least one insulating core (2), a thermoplastic foam material at a melting point, is used.

6. The method for manufacturing a sandwich-type insulating composite panel according to claim 5, **characterized in that**, to produce the insulating foam able to constitute the at least one insulating core (2), a thermoplastic material, having a melting point greater than or equal to the polymerization temperature of the paint powders, such as a thermoplastic polyethylene terephthalate-based foam which has a 240 °C melting temperature, is used.

7. The method for manufacturing a sandwich-type insulating composite panel according to claim 6, **characterized in that** the insulating foam able to constitute the at least one thermoplastic insulating core (2) is produced by using recycled material of a material identical to the material that has been used to produce this thermoplastic insulating foam.

8. The method for manufacturing a sandwich-type insulating composite panel according to any of claims 5 to 7, **characterized in that**
- the at least one insulating core (2) is deformed by thermoforming operations at temperatures close to the melting point of its thermoplastic material,
- complex geometric shapes (9) are thus given to this core (2), on a repetitive basis if required, and
- the other manufacturing and metallization steps (1, 1') of the insulating panel and of the paint powder coating (3, 3') on this metallized panel are then performed.

9. The method for manufacturing a sandwich-type insulating composite panel according to any one of claims 1 to 8, **characterized in that** the paint (3, 3') is baked at high temperatures between 120 and 210 °C.

10. The method for manufacturing a sandwich-type insulating composite panel according to any one of claims 1 at 9, **characterized in that** the paint powder is deposited by projection on the at least one metallized side of the panel.

11. The method for manufacturing a sandwich-type insulating composite panel according to any one of claims 1 to 9, **characterized in that** the paint powder is deposited by sublimation of setting based on a paper medium paint (3, 3') transferred directly to the conductive surface of the at least one metallized side of the panel.

12. The method for manufacturing a sandwich-type insulating composite panel according to any one of claims 1 to 9, **characterized in that** a foam material is used, constituting the at least one insulating core (2), of a density comprised between 30 and 200 kg/m3.

13. The method for manufacturing a sandwich-type insulating composite panel according to any one of claims 1 to 9, **characterized in that** organic resin-based powder paints (3, 3') are used, such as polyester, polyurethane, etc.

14. The method for manufacturing a sandwich-type insulating composite panel according to any one of claims 1 to 10, **characterized in that** a metallization on the at least one side of the insulating panel of a thickness comprised between 0.01 and 5 mm is carried out.
